# DEMANDE DE BREVET EUROPEEN

(11) **EP 0 578 548 A1**
(43) Date de publication de la demande: **12.01.1994**
(21) Numéro de dépôt: 93401719.5
(22) Date de dépôt: 02.07.1993
(51) Int. Cl.: H02J 9/06

(54) **Dispositif d'alimentation électrique secourue à tension de sortie alternative**

(30) Priorité: 06.07.1992 FR 9208305
(71) Demandeur: SERRAS-PAULET, Edouard, F-92200 Neuilly Sur Seine (FR)
(72) Inventeur: SERRAS-PAULET, Edouard, F-92200 Neuilly Sur Seine (FR)
(74) Mandataire: Ramey, Daniel

(57) **Abrégé**

Dispositif d'alimentation électrique secourue à tension sinusoïdale régulée de sortie, comprenant un redresseur (10) alimenté par la tension réseau et connecté aux bornes d'un montage en pont dont deux branches (12) comprennent des interrupteurs commandés (16) et dont deux autres branches (18) comprennent les transistors (22) d'un onduleur, l'enroulement primaire d'un transformateur étant connecté dans la diagonale (24) du pont pour fournir aux bornes de l'enroulement secondaire (30) la tension régulée de sortie Vs, soit en présence de la tension réseau, soit à partir de la tension fournie par une batterie B d'accumulateurs électriques.

## Description

L'invention concerne un dispositif d'alimentation électrique secourue linéaire à tension de sortie alternative, ce dispositif étant destiné en particulier à être interposé entre un réseau de distribution électrique et un appareil électronique tel par exemple qu'un appareil de traitement de l'information.

Des dispositifs de ce type ont déjà été décrits dans des brevets antérieurs du demandeur (EP-0 237 369 et EP 0 443 917), ces dispositifs présentant un certain nombre d'améliorations et d'avantages par rapport aux dispositifs concurrents, au niveau du rendement, de la fiabilité et de l'absence de perturbations rayonnées ou conduites.

De façon générale, ces dispositifs comprennent un onduleur associé à une batterie d'accumulateurs électrique et commandé pour suppléer la tension électrique fournie normalement par un réseau de distribution, en cas de microcoupure, de coupure ou de disparition de cette tension.

Des transformateurs sont prévus en entrée et/ou en sortie pour fournir une tension alternative régulée à l'appareil à alimenter.

Ces transformateurs ont pour inconvénient d'être lourds, encombrants et relativement coûteux.

L'invention a notamment pour but de simplifier les dispositifs précités et de réduire leur encombrement, leur poids et leur prix de revient.

Elle a pour objet un dispositif d'alimentation du type précité, qui ne comprend qu'un seul transformateur.

Elle a également pour objet un dispositif de ce type, dont le rendement atteint 90%.

Elle a encore pour objet un dispositif de ce type, présentant une fiabilité accrue par rapport aux dispositifs antérieurs connus.

Elle propose donc un dispositif d'alimentation électrique secourue à tension de sortie alternative, ce dispositif étant destiné en particulier à être interposé entre un réseau de distribution électrique et un appareil électronique tel qu'un appareil de traitement de l'information, et comprenant un redresseur alimenté par le réseau de distribution et connecté aux bornes d'un onduleur tel qu'un étage de puissance à transistors du type push-pull, une batterie d'accumulateurs électriques pour alimenter l'onduleur en cas de coupure ou de disparition de la tension électrique fournie par le réseau de distribution, et un transformateur dont l'enroulement secondaire délivre la tension de sortie alternative désirée, caractérisé en ce qu'il comprend un montage en pont dont deux branches reliées à une même borne de sortie du redresseur comportent les transistors d'un onduleur, dont les deux autres branches reliées à l'autre borne de sortie du redresseur comportent chacune un interrupteur commandé et dont la diagonale comporte l'enroulement primaire du transformateur, ainsi que des moyens de commande des transistors de l'onduleur et des interrupteurs commandés pour que, en présence de la tension fournie par le réseau, la tension redressée fournie par le redresseur soit appliquée alternativement dans un sens et dans l'autre à l'enroulement primaire du transformateur et génère une tension alternative régulée de sortie aux bornes de l'enroulement secondaire du transformateur.

Le dispositif selon l'invention permet d'alimenter un appareil électronique par une tension sinusoïdale régulée à partir de la tension redressée du réseau, par pilotage d'un pont de transistors fonctionnant en linéaire et d'interrupteurs commandés. Le rendement dans ces conditions est excellent.

De plus, ce dispositif ne comprend qu'un seul transformateur. Il en résulte un gain de poids, de volume et de prix par rapport aux dispositifs antérieurs.

Dans une première forme de réalisation de l'invention, le dispositif ne comprend qu'un onduleur et en cas de coupure ou de disparition de la tension du réseau, les interrupteurs commandés sont ouverts (le dispositif étant alors réduit à un circuit push-pull) et les transistors de l'onduleur continuent d'être pilotés en alternance par les moyens de commande précités, pour générer une tension alternative aux bornes de l'enroulement secondaire du transformateur à partir de la tension continue fournie par la batterie.

La batterie est de préférence connectée à l'enroulement primaire du transformateur par un interrupteur commandé, qui est ouvert en présence de la tension réseau et qui est fermé en cas de coupure ou de disparition de la tension réseau.

Dans une variante de réalisation de l'invention, un condensateur de filtrage est connecté entre les bornes de sortie du redresseur, la tension redressée filtrée qui est ainsi fournie étant supérieure à la tension de la batterie.

Dans ce cas, les transistors de l'onduleur peuvent être pilotés à une fréquence quelconque pour alimenter l'appareil connecté au dispositif par une tension alternative ayant une fréquence indépendante de la fréquence du réseau.

Dans une deuxième forme de réalisation de l'invention, le dispositif comprend deux onduleurs en parallèle, le premier onduleur se trouvant dans le montage en pont, le deuxième onduleur étant connecté aux bornes d'un deuxième enroulement primaire du transformateur précité, ce deuxième enroulement étant en parallèle avec le premier, le deuxième onduleur étant alimenté par la batterie en cas de disparition ou de baisse de la tension fournie par le réseau, le premier onduleur fonctionnant seul en présence de la tension fournie par le réseau.

Cette deuxième forme de réalisation du dispositif selon l'invention permet d'améliorer le fonctionnement sur une charge réactive.

On peut également commander les onduleurs pour que les deux fonctionnent en parallèle sur la batterie.

L'invention sera mieux comprise et d'autres caractéristiques, détails, et avantages de celle-ci apparaîtront plus clairement à la lecture de la description qui suit, faite en référence aux dessins annexés et dans lesquels :
la figure 1 représente schématiquement un dispositif selon l'invention;
les figures 2 et 3 représentent schématiquement les courbes des tensions de pilotage des transistors de l'onduleur;
les figures 4 et 5 représentent schématiquement deux variantes de réalisation de l'invention;
les figures 6 et 7 représentent des courbes de tension et de courant;
la figure 8 représente une variante de réalisation de l'invention;
la figure 9 représente schématiquement la carte de commande du dispositif selon l'invention ;
la figure 10 représente le schéma équivalent d'une charge électronique ;
la figure 11 représente l'allure des tensions et du courant au démarrage d'une charge électronique.

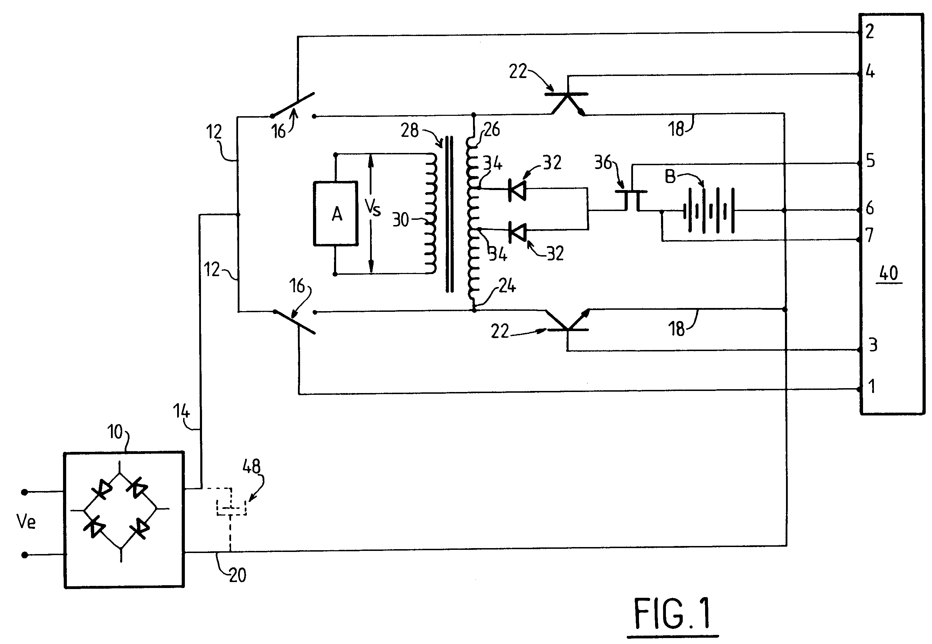

On se réfère d'abord à la figure 1 dans laquelle on a représenté schématiquement la structure générale d'un mode de réalisation du dispositif selon l'invention.

Ce dispositif comprend un redresseur 10, tel qu'un pont de diodes, comprenant deux bornes d'entrée auxquelles est appliquée la tension Ve fournie par le réseau de distribution électrique et deux bornes de sortie entre lesquelles est connecté un montage en pont d'un onduleur et de deux interrupteurs commandés, avec l'enroulement primaire d'un transformateur de sortie connecté dans la diagonale du pont.

Plus précisément, ce pont comprend deux branches 12 qui sont reliées à une même borne de sortie 14 du redresseur 10 et qui comprennent chacune un interrupteur commandé 16, tel par exemple qu'un transistor commandé en tout ou rien. Les deux autres branches 18 du pont sont reliées à l'autre borne de sortie 20 du redresseur et comportent chacune un transistor (par exemple du type MOS-FET) 22 dont l'émetteur est relié à la borne de sortie 20 du redresseur et dont le collecteur est relié à la diagonale 24 du pont, dans laquelle est connecté l'enroulement primaire 26 d'un transformateur 28 dont l'enroulement secondaire 30 fournit une tension de sortie régulée Vs qui est appliquée aux bornes d'alimentation d'un appareil à alimenter A, tel qu'un micro- ou un mini-ordinateur par exemple.

Une batterie B d'accumulateurs électriques a une borne de sortie reliée à la borne de sortie 20 du redresseur 10 et une autre borne de sortie reliée à l'enroulement primaire 26 du transformateur par deux diodes 32 montées en parallèle et dont les cathodes sont reliées à des prises 34 de l'enroulement primaire, qui sont symétriques par rapport au point milieu de cet enroulement et positionnées pour conserver un même nombre de volts par spire en présence de la tension réseau Ve ou en présence de la tension batterie, comme on le verra plus en détail dans ce qui suit.

Dans cette forme de réalisation, un interrupteur commandé 36 tel qu'un thyristor est interposé entre la batterie B et les diodes 32.

Les bornes de commande des interrupteurs commandés 16 sont reliées aux sorties 1 et 2 d'une carte de commande 40 comprenant également deux sorties 3 et 4 reliées aux bases des transistors 22 pour piloter ces derniers, une sortie 5 reliée à la borne de commande de l'interrupteur commandé ou thyristor 36, et deux bornes 6, 7 reliées aux bornes de la batterie B pour contrôler la tension de celle-ci.

En outre, et comme on le verra dans ce qui suit, la carte de commande 40 comprend des bornes d'entrée de la tension réseau Ve et des bornes de contrôle de la tension de sortie Vs et du courant de sortie.

Le dispositif qui vient d'être décrit fonctionne de la façon suivante:
en présence de la tension réseau Ve, et lorsque celle-ci reste entre deux valeurs prédéterminées (par exemple ± 10% par rapport à la tension nominale), l'interrupteur commandé 36 est ouvert pour isoler la batterie B de l'enroulement primaire 26 du transformateur. Les interrupteurs commandés 16 et les transistors 22 fonctionnant en linéaire sont pilotés, en alternance, par la carte de commande 40 de telle façon que la tension ondulée redressée double alternance fournie par le redresseur 10 à partir de la tension réseau Ve soit appliquée dans un sens, puis dans l'autre à l'enroulement primaire du transformateur pour générer une tension alternative de sortie Vs aux bornes de l'enroulement secondaire 30 du transformateur. Plus précisément, pour une alternance de la tension redressée, un des interrupteurs commandés 16 est ouvert tandis que l'autre est fermé et simultanément le transistor 22 situé dans la branche du pont reliée directement à la branche contenant l'interrupteur 16 ouvert est conducteur tandis que le transistor 22 situé dans l'autre branche du pont, reliée directement à la branche du pont comprenant l'interrupteur 16 fermé, est bloqué. Ainsi, le courant fourni par le redresseur 10 circule dans la branche du pont comprenant l'interrupteur 16 fermé puis dans l'enroulement primaire 26 du transformateur et dans la branche du pont comprenant le transistor 22 conducteur. A l'alternance suivante de la tension redressée, l'interrupteur 16 qui était ouvert est fermé, tandis que l'interrupteur 16 qui était fermé est ouvert et simultanément, le transistor 22 qui était conducteur est bloqué, tandis que l'autre transistor 22 qui était bloqué est conducteur, et le courant circule alors dans l'autre sens dans l'enroulement primaire 26 du transformateur. En pilotant les transistors de l'onduleur par une tension ondulée régulée, on génère, aux bornes de l'enroulement secondaire 30, une tension alternative régulée Vs qui est synchrone et en phase avec la tension réseau Ve.

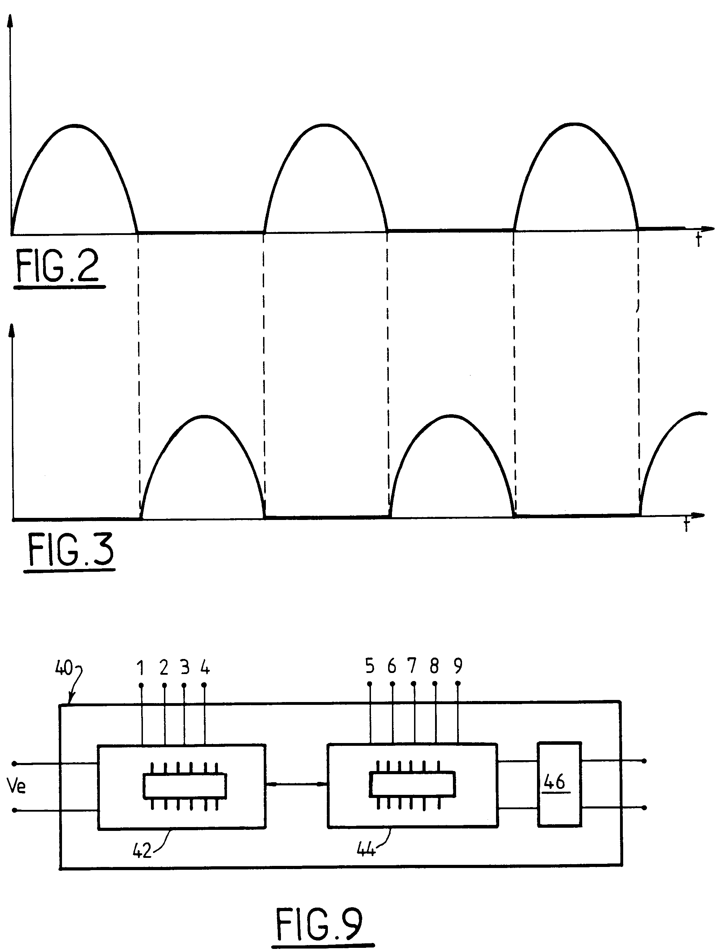

Les microcoupures, coupures ou disparitions de la tension réseau Ve, ainsi que ses variations au-delà des limites prédéterminées sont détectées par la carte de commande 40 qui ouvre alors les deux interrupteurs commandés 16 et commande la fermeture de l'interrupteur commandé ou thyristor 36, tout en continuant de piloter les transistors 22. Ces derniers sont pilotés par les mêmes tensions ondulées simple alternance qu'auparavant, représentées dans les figures 2 et 3, qui sont fournies par la carte de commande 40 et qui étaient synchrones avec la tension réseau Ve, pour produire une tension Vs sinusoïdale régulée.

La tension représentée en figure 2 est fournie par exemple à la borne 3 de la carte de commande 40 tandis que la tension de la figure 3 est fournie à la borne 4 de cette carte de commande. L'interrupteur 36 étant fermé, le courant fourni par la batterie B passe par une diode 32, circule dans une partie de l'enroulement primaire 26 et passe dans le transistor 22 dont la base reçoit de la carte de commande 40 une tension de pilotage formée d'une arche de sinusoïde régulée et à faible taux de distorsion comme représenté au début de la courbe de la figure 2. Lorsque cette tension de pilotage devient nulle, c'est l'autre transistor 22 qui reçoit sur sa base une tension de pilotage constituée par une arche de sinusoïde régulée et à faible taux de distorsion, et le courant fourni par la batterie passe alors par l'autre diode 32 et circule dans l'enroulement primaire vers ce transistor 22.

Les deux transistors 22 ainsi montés forment un étage de puissance du type push-pull et constituent un onduleur avec l'enroulement primaire du transformateur. Les points 34 de connexion des diodes 32 sur l'enroulement primaire sont déterminés pour que le nombre de volts par spire reste constant quand c'est la tension ondulée redressée fournie par le redresseur 10 qui circule dans tout l'enroulement primaire 26 ou quand c'est la tension fournie par la batterie qui circule dans une partie de cet enroulement primaire, entre un point de connexion 34 et l'extrémité de l'enroulement primaire 24 connectée au collecteur du transistor 22 correspondant. Cela permet notamment d'utiliser une batterie B fournissant une tension de sortie adaptée aux différents cas d'utilisation (par exemple 48 volts ou 98 volts).

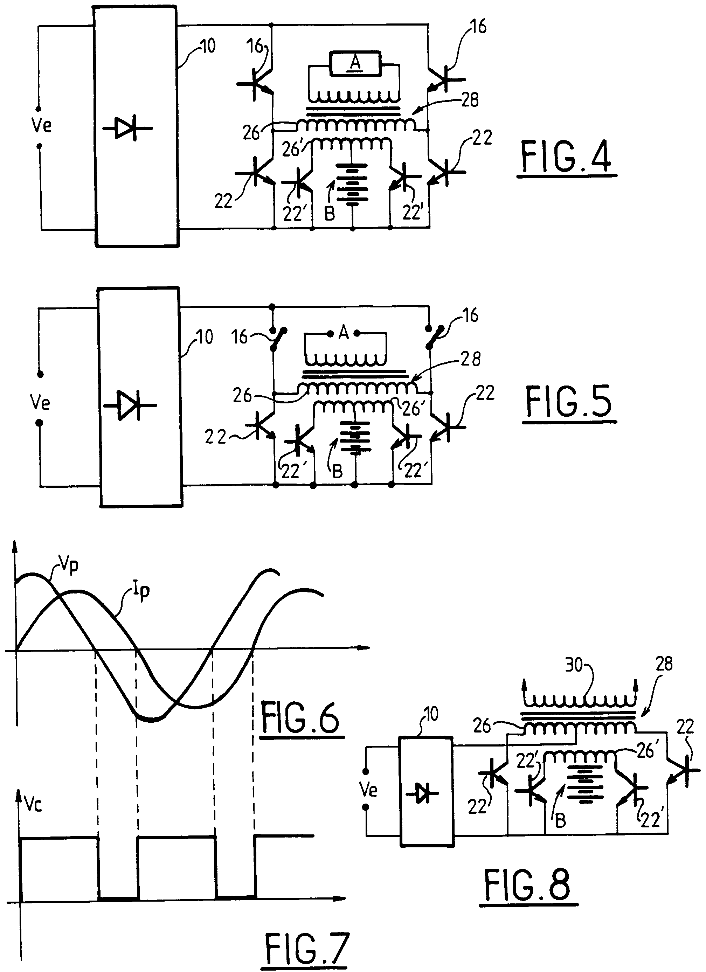

On se réfère maintenant à la figure 4 qui représente une deuxième forme de réalisation du dispositif selon l'invention, et dans laquelle la batterie B est associée à un deuxième onduleur monté en parallèle avec le premier et connecté aux bornes d'un deuxième enroulement primaire 26' du transformateur 28, ce deuxième enroulement primaire 26' étant en parallèle avec le premier enroulement primaire 26.

Ainsi, le dispositif selon l'invention comprend, comme dans le premier mode de réalisation, un redresseur 10 connecté aux bornes du réseau et recevant la tension d'entrée Ve, un montage en pont de deux transistors 16 et des deux transistors 22 du premier onduleur cité, avec le premier enroulement primaire 26 du transformateur 28 dans la diagonale de ce montage en pont. Le deuxième onduleur est du même type que le premier onduleur et comprend un circuit push-pull de transistors 22', fonctionnant en linéaire et pilotés par la carte de commande 40 de la même façon que les transistors 22 du premier onduleur.

La borne positive de la batterie B est reliée au point milieu du deuxième enroulement primaire 26' du transformateur, sa borne négative étant reliée aux émetteurs des transistors 22', éventuellement par l'intermédiaire d'une diode de protection.

Le fonctionnement de ce dispositif est le suivant :
en présence de la tension Ve fournie par le réseau, les transistors 22 du premier onduleur et les transistors 16 sont pilotés en mode linéaire comme déjà décrit pour les transistors 22 du premier mode de réalisation de la figure 1.

En cas de baisse, de coupure ou de disparition de la tension Ve fournie par le réseau, les transistors 16 sont bloqués par la carte de commande 40, et les transistors 22' du deuxième onduleur sont pilotés exactement comme les transistors 22 du premier onduleur.

En conséquence, la tension Vs fournie à l'appareil A branché aux bornes de l'enroulement secondaire 30 du transformateur 28, est une tension sinusoidale régulée exactement comme dans le cas du mode de réalisation de la figure 1.

Les deux onduleurs fonctionnent en alternance, sous commande de la carte 40 : en présence de la tension Ve fournie par le réseau, les transistors 22' du deuxième onduleur sont bloqués et inversement quand la tension Ve disparaît ou devient inférieure à une valeur limite, les transistors 16 sont bloqués et les transistors 22 sont éventuellement bloqués.

On a constaté que cette variante de réalisation est bien adaptée à l'alimentation d'une charge du type réactive.

On peut également commander les deux onduleurs en parallèle sur la batterie de telle sorte que, en présence de la tension Ve du réseau, seul le premier onduleur fonctionne et, en cas de baisse ou de disparition de la tension Ve, les deux onduleurs sont alimentés par la batterie et fonctionnent en parallèle pour fournir la tension Vs sur l'enroulement secondaire du transformateur.

La variante de réalisation représentée en figure 5 est sensiblement identique à la réalisation de la figure 4, mais les transistors 16 des deux branches supérieures du pont fonctionnent comme des interrupteurs et sont commandés en tout ou rien par la tension en créneaux Vc représentée en figure 7.

Cette tension de commande Vc est définie à partir du signe positif ou négatif de la puissance instantanée aux bornes de l'enroulement primaire 26 du transformateur 28. En figure 6, on a représenté l'allure de la tension Vp et du courant Ip dans cet enroulement primaire. Lorsque la puissance instantanée Vp x Ip est positive, c'est-à-dire lorsque Vp et Ip sont tous les deux positifs ou négatifs, la tension Vc de commande des interrupteurs 16 est égale à une valeur prédéterminée non nulle. Au contraire, lorsque la puissance instantanée est négative, Vp et Ip étant de signes contraires, la tension Vc de commande des interrupteurs 16 est égale à 0.

Ce mode de commande est bien adapté à l'alimentation d'une charge A réactive, pour laquelle le courant et la tension sont déphasés. En commandant les interrupteurs 16 pour les ouvrir lorsque la tension et le courant dans le transformateur sont de signes contraires, on évite tout problème au niveau des transistors 22 de l'onduleur.

Pour le reste, la variante de réalisation de la figure 5 fonctionne exactement comme celle de la figure 4.

La figure 8 représente une autre variante de réalisation du dispositif selon l'invention, qui diffère de celle de la figure 4 en ce que les deux transistors ou interrupteurs commandés 16 sont supprimés, la borne supérieure de sortie du redresseur 10 étant reliée directement au point milieu de l'enroulement primaire 26 du transformateur 28. Pour le reste, le dispositif est identique à celui de la figure 4, et les transistors 22, 22' des onduleurs sont commandés de la même façon que ceux de la figure 4.

Le rendement du dispositif selon l'invention est excellent et atteint 90% en présence de la tension réseau. La tension sinusoïdale de sortie Vs générée à partir de la tension réseau est régulée et filtrée de toute perturbation, distorsion ou surtension. La carte de commande 40 contrôle la tension réseau Ve et la tension de sortie Vs de façon à réguler la tension de sortie Vs par exemple à ± 5% de sa valeur nominale, pour des variations de ± 10% de la tension réseau Ve par rapport à sa valeur nominale.

Les tensions de pilotage des transistors 22, 22' qui sont générées par la carte de commande 40, permettent d'éliminer toutes les perturbations, les taux de distorsion et les surtensions de la tension réseau. Les microcoupures, coupures et disparitions de la tension réseau sont immédiatement compensées par la batterie B après ouverture des interrupteurs commandés ou transistors 16. Le temps de réponse total est inférieur à la milliseconde, de sorte qu'aucune perturbation ne peut altérer la tension alternative de sortie Vs, les self-inductances de fuite du transformateur masquant complètement les effets de ce temps de réponse.

La carte de commande 40 est également conçue pour, en cas de surcharge, gérer les points de fonctionnement des transistors 22, 22' pour les maintenir dans leurs aires de sécurité, ces transistors étant dimensionnés pour accepter trente fois leur courant nominal pendant dix alternances de tension, ce qui permet de fournir très largement les courants d'appel requis par les appareils électroniques A.

La carte de commande 40 contrôle également la tension de la batterie et la charge de celle-ci au moyen d'un circuit de charge classique, tel qu'une alimentation à découpage par exemple.

Les circuits de la carte de commande 40 sont à la portée de l'homme du métier et ont déjà été décrits dans les brevets antérieurs précités du demandeur, auxquels il suffit de se référer.

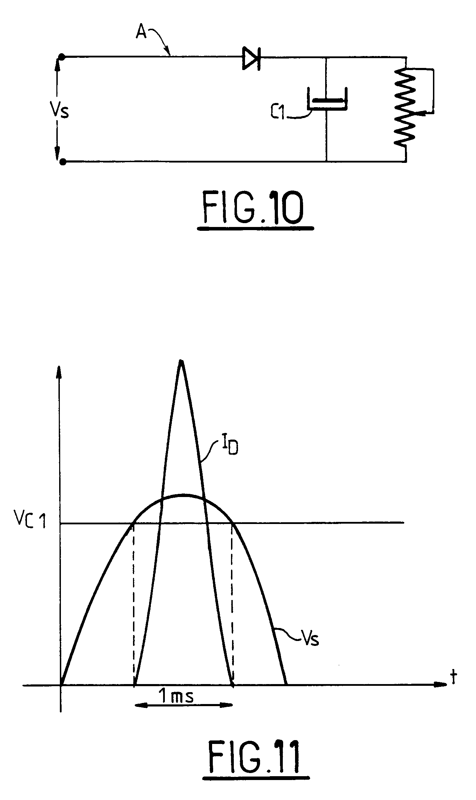

Avantageusement, cette carte de commande peut également être du type à microprocesseurs comme représenté schématiquement en figure 9 et comprend alors deux microprocesseurs 42 et 44 connectés l'un à l'autre et recevant la tension Ve, le premier microprocesseur 42 étant chargé de générer et de synchroniser les tensions de pilotage pour les fournir aux bases des transistors 22 ou 22' sur ses sorties 3 et 4 et de commander les interrupteurs 16 par ses bornes de sortie 1 et 2. Le second microprocesseur 44 est chargé de commander l'interrupteur 36 par sa borne de sortie 5, de contrôler la tension de la batterie par ses bornes 6 et 7, de contrôler la tension et le courant de sortie aux bornes de l'enroulement secondaire du transformateur par ses bornes 8 et 9, et de commander le circuit de charge 46 de la batterie.

Le second microprocesseur 44 peut également avoir d'autres fonctions, telles que l'affichage de la tension de la batterie, du courant de sortie et du fonctionnement réseau ou batterie, la mise en mémoire de paramètres d'étalonnage et la gestion d'une mémoire.

De plus, l'un de ces microprocesseurs peut être utilisé pour déterminer le courant crête admissible par les transistors 22 de l'onduleur au démarrage d'une charge électronique telle qu'un micro-ordinateur, par exemple. On a représenté en figure 10 le schéma équivalent d'une charge électronique désignée par la référence A, et en figure 11 l'allure des tensions et du courant au démarrage pendant la première demi-alternance de la tension de sortie de l'onduleur. Pendant cette première demi-alternance, le dispositif ne fournit du courant que lorsque la tension de sortie Vs est supérieure à la tension Vcl du condensateur C1, soit pendant une durée faible qui peut être de l'ordre de 1 ms. Le micro-processeur de la carte de commande mesure cette durée de conduction et détermine en fonction de cette durée le courant de crête admissible par les transistors 22, alors que les cartes classiques de commande prennent en compte la durée de la demi-alternance, soit 10 ms. On peut ainsi assurer le démarrage de systèmes électroniques réclamant des VA (volts-ampères) élevés, avec un onduleur de faible puissance efficace et capable de délivrer des facteurs de forme de courant de 8 ou 10 (le courant fourni au démarrage étant représenté par I_{D} en figure 11).

Dans une variante de réalisation de l'invention, on peut prévoir, comme représenté en pointillés en figure 1, de connecter un condensateur électrochimique 48 entre les bornes de sortie 14 et 20 du redresseur 10, pour appliquer une tension redressée et filtrée à l'enroulement primaire 26 du transformateur, en présence de la tension réseau. Dans ce cas, on peut supprimer l'interrupteur commandé 36 qui est interposé entre la batterie B et les diodes 32 de liaison à l'enroulement primaire 26, du fait que cette tension redressée filtrée appliquée aux bornes de l'enroulement primaire 26 est toujours supérieure, en présence de la tension réseau, à la tension fournie par la batterie B. Les pertes dans le dispositif en présence de la tension réseau sont légèrement augmentées, et le rendement de ce dispositif passe à environ 75%.

Par contre, la fréquence de la tension de sortie Vs est alors indépendante de celle de la tension réseau Ve, et est déterminée par la fréquence de la tension de pilotage des transistors 22. On peut ainsi régler la fréquence de la tension de sortie Vs à n'importe quelle valeur désirée.

Cette variante de réalisation est également applicable aux dispositifs des figures 4, 5 et 8 et est utilisée lorsqu'on veut réaliser un onduleur triphasé au moyen de trois dispositifs selon l'invention. Pour cela, la carte de commande 40 comprend une sortie supplémentaire fournissant la même tension de pilotage que précité, mais déphasée de 120°. Les trois dispositifs selon l'invention sont connectés entre eux de telle sorte que la tension déphasée d'un premier dispositif serve de tension pilote de référence pour un autre dispositif. On réalise ainsi un onduleur mono-triphasé.

De façon générale, le dispositif selon l'invention présente un certain nombre d'avantages importants par rapport aux dispositifs concurrents :
- l'onduleur formé par les transistors 22 ou 22' est "on line" (pas de temps de commutation),
- le rendement du dispositif atteint 90% en présence de la tension réseau,
- il n'émet pas de perturbations rayonnées ou conduites,
- il ne comporte qu'un seul transformateur, ne comprenant qu'un ou deux enroulements primaires et un enroulement secondaire, d'où une réduction de volume et de prix,
- il accepte les courants d'appel des charges électroniques (trente fois l'intensité efficace nominale pendant dix alternances de la tension réseau),
- plusieurs dispositifs peuvent être montés en parallèle pour augmenter la puissance utile,
- trois dispositifs connectés entre eux peuvent constituer un onduleur mono-triphasé.

## Revendications

1. Dispositif d'alimentation électrique secourue à tension de sortie alternative, ce dispositif étant destiné en particulier à être interposé entre un réseau de distribution électrique et un appareil électronique A tel qu'un appareil de traitement de l'information, et comprenant un redresseur (10) alimenté par le réseau de distribution et connecté aux bornes d'un onduleur tel qu'un étage de puissance push-pull à transistors (22, 22'), une batterie B d'accumulateurs électriques pour alimenter l'onduleur en cas de coupure ou de disparition de la tension électrique Ve fournie par le réseau de distribution, et un transformateur (28) dont l'enroulement secondaire (30) délivre la tension de sortie alternative désirée, caractérisé en ce qu'il comprend un montage en pont dont deux branches (18) reliées à une même borne de sortie (20) du redresseur (10) comportent les transistors (22) d'un onduleur, dont les deux autres branches (12) reliées à l'autre borne de sortie (14) du redresseur comportent chacune un interrupteur commandé (16) et dont la diagonale (24) comporte l'enroulement primaire (26) du transformateur, et des moyens de commande des transistors (22) de l'onduleur et des interrupteurs commandés (16) pour que, en présence de la tension Ve fournie par le réseau, la tension redressée fournie par le redresseur (10) soit appliquée alternativement dans un sens et dans l'autre à l'enroulement primaire (26) du transformateur et génère une tension alternative régulée de sortie Vs aux bornes de l'enroulement secondaire (30) du transformateur.

2. Dispositif selon la revendication 1, caractérisé en ce que, en cas de coupure ou de disparition de la tension Ve du réseau, les interrupteurs commandés (16) sont ouverts et les transistors (22) de l'onduleur sont pilotés en mode linéaire par les moyens de commande (40) pour générer la tension alternative régulée Vs aux bornes de l'enroulement secondaire (30) du transformateur à partir de la tension continue fournie par la batterie B.

3. Dispositif selon la revendication 2, caractérisé en ce que la batterie B est connectée à l'enroulement primaire (26) du transformateur par deux diodes (32) en parallèle reliées à des points symétriques (34) de l'enroulement primaire (26) pour conserver dans cet enroulement un même nombre de volts par spire en présence de la tension réseau Ve et en présence de la tension batterie.

4. Dispositif selon l'une des revendications précédentes, caractérisé en ce que la batterie B est connectée à l'enroulement primaire (26) du transformateur par un interrupteur commandé (36), qui est ouvert en présence de la tension réseau et qui est fermé en cas de coupure ou de disparition de la tension réseau.

5. Dispositif selon la revendication 1, caractérisé en ce qu'il comprend deux onduleurs en parallèle, le premier onduleur se trouvant dans le montage en pont, le deuxième onduleur étant connecté aux bornes d'un deuxième enroulement primaire du transformateur précité, ce deuxième enroulement étant en parallèle sur le premier, le deuxième onduleur étant alimenté par la batterie (B) en cas de disparition ou de baisse de la tension Ve fournie par le réseau, tandis que le premier onduleur fonctionne seul en présence de la tension Ve fournie par le réseau.

6. Dispositif selon la revendication 5, caractérisé en ce que les interrupteurs commandés (16) du montage en pont sont des transistors pilotés en mode linéaire comme les transistors (22) du premier onduleur, ou en mode tout ou rien à partir du signe de la puissance instantanée VpxIp dans l'enroulement primaire du transformateur (28).

7. Dispositif selon la revendication 5, caractérisé en ce que les interrupteurs commandés (16) sont supprimés et ladite autre borne de sortie correspondante du redresseur (10) est reliée au point milieu de l'enroulement primaire (28) associé au premier onduleur.

8. Dispositif selon l'une des revendications 1 à 7, caractérisé en ce qu'un condensateur de filtrage (48) est connecté entre les bornes de sortie (14, 20) du redresseur (10), pour fournir une tension redressée filtrée à l'enroulement primaire (26) du transformateur en présence de la tension réseau Ve, cette tension redressée filtrée étant supérieure à la tension fournie par la batterie B.

9. Dispositif selon l'une des revendications précédentes, caractérisé en ce que les transistors (22, 22') du ou de chaque onduleur fonctionnent en linéaire et sont pilotés par une tension sinusoidale redressée à simple alternance, régulée et filtrée.

10. Dispositif selon l'une des revendications précédentes, caractérisé en ce qu'il comprend des moyens de comparaison de la tension réseau à des valeurs prédéterminées, des moyens de contrôle de la tension de la batterie, des moyens de charge de la batterie à partir de la tension réseau, des moyens de contrôle de la tension alternative de sortie Vs et du courant de sortie, et des moyens de contrôle des points de fonctionnement des transistors (22) du ou de chaque onduleur.

11. Dispositif selon la revendication 10, caractérisé en ce que les moyens précités de commande, de comparaison et de contrôle sont montés sur une carte de commande (40) à microprocesseurs (42, 44).

12. Dispositif selon la revendication 8, caractérisé en ce qu'il est connecté à deux autres dispositifs du même type, ayant des tensions pilotes déphasées de 120°, pour former un onduleur mono-triphasé.
